# EUROPÄISCHE PATENTSCHRIFT

(11) **EP 0 597 211 B1**
(45) Veröffentlichungstag und Bekanntmachung des Hinweises auf die Patenterteilung: **07.05.1997**
(21) Anmeldenummer: 93114968.6
(22) Anmeldetag: 16.09.1993
(51) Int. Cl.: G02B 6/42, G02B 6/34, H04B 10/24

(54) **Optischer Duplexer**
Optical duplexer
Duplexeur optique

(30) Priorität: 16.09.1992 DE 4230952
(43) Veröffentlichungstag der Anmeldung: 18.05.1994
(73) Patentinhaber: Alcatel SEL Aktiengesellschaft, D-70435 Stuttgart (DE)
(72) Erfinder: Hehmann, Jörg, D-70499 Stuttgart (DE); Baumgärtner, Armin, D-71634 Ludwigsburg (DE); Lösch, Kurt, D-70191 Stuttgart (DE)
(74) Vertreter: Pohl, Herbert, Dipl.-Ing.

(56) Entgegenhaltungen:
- EP-A- 0 171 615
- EP-A- 0 174 130
- EP-A- 0 250 331
- EP-A- 0 347 120
- GB-A- 2 162 336
- REVIEW OF SCIENTIFIC INSTRUMENTS, Bd. 63, Nr. 1, Januar 1992, US, Seiten 713-721; D. MÜNCHMEYER et al.: 'Manufacture of three-dimensional microdevices using synchrotron radiation'
- PATENT ABSTRACTS OF JAPAN vol. 16, no. 540 (P-1450) 24. Juli 1992 & JP-A-04 204 403
- PATENT ABSTRACTS OF JAPAN vol. 16, no. 489 (P-1433) 23. Juni 1992 & JP-A-04 175 705
- PATENT ABSTRACTS OF JAPAN vol. 11, no. 337 (P-633) (2784) 5. November 1987 & JP-A-62 121 409
- PATENT ABSTRACTS OF JAPAN vol. 9, no. 262 (P-398) 17. Juni 1985 & JP-A-60 111 203

## Beschreibung

Die Erfindung betrifft einen optischen Duplexer der im Oberbegriff des Anspruchs 1 näher bezeichneten Ausführung. Derartige Duplexer werden in Systemen der optischen Nachrichtentechnik verwendet.

Ein optischer Duplexer nach dem Oberbegriff des Anspruchs 1 ist aus der EP 0 250 331 B1 bekannt. Der Duplexer hat ein Gehäuse, das aus einem massiven Block mit diesen T-förmig durchsetzenden Bohrungen besteht. Die Bohrungen weisen abgestufte Durchmesser auf, wobei der an einer Stirnseite des Gehäuses beginnende Bohrungsabschnitt einen so großen Durchmesser hat, daß darin eine Laserdiode, die in einer rückwärtig mit einem Flansch versehenen Zentrierhülse befestigt ist, radial ausgelenkt und auf den Fokus einer davor in einem Bohrungsabschnitt mit kleinerem Durchmesser angeordneten Sammellinse justiert und befestigt werden kann.

Die ebenfalls in einer Zentrierhülse steckende Fotodiode und die Sammellinse sind in gleicher Weise im Gehäuse angeordnet und befestigt. An dem der Laserdiode gegenüber liegenden Ende hat die Bohrung einen im Durchmesser größeren Abschnitt mit einer darin befestigten Adapterhülse, die zur Aufnahme eines Fasersteckers dient, der einen Lichtwellenleiter und vorn am freien Ende eine Sammellinse enthält. Zwischen dieser und der der Laserdiode zugeordneten Sammellinse enthält das Gehäuse im Bereich der Bohrungsverzweigung einen Strahlteiler. In dem an einer Seitenwand endenden Bohrungsabschnitt, der eine wie die Laserdiode befestigte Fotodiode aufnimmt, ist vor letzterer eine auf den Strahlteiler ausgerichtete, weitere Sammellinse angeordnet. Die erwähnten Sammellinsen sind ausnahmslos bikonvex ausgebildet und im Durchmesser um ein Vielfaches größer als der Lichtwellenleiter im Faserstecker. Bei der Montage des Duplexers werden zuerst der Strahlteiler und danach die Sammellinsen in die Aufnahmebohrungen des Gehäuses eingesetzt, justiert und fixiert, und anschließend die Anordnungen mit der Laser- und Fotodiode. Der Faserstecker wird dagegen vor dem Einsetzen in das Gehäuse fertiggestellt.

Weiterhin ist bereits ein optischer Duplexer vorgeschlagen worden (EP 0 238 977 A2), der innerhalb eines hermetisch dichten Gehäuses einen winkelförmigen Trägerblock hat, auf dessen hochstehendem Schenkel die Laserdiode fixiert ist und auf dessen liegendem Schenkel eine mittels Quarzblock, metallisiertem Plättchen und verschiedenen Lotschichten vor der Laserdiode fixierte Kugellinse angeordnet ist. Dieser gegenüber ist in einer Öffnung des Gehäuses eine weitere Kugellinse sowie zwischen beiden Linsen der Strahlteiler und auf diesen ausgerichtet eine weitere, vor der Fotodiode sitzende Kugellinse angeordnet. Die in der Gehäuseöffnung fixierte Kugellinse fokussiert die von der Laserdiode emittierte Lichtstrahlung auf das Faserende eines Lichtwellenleiters, der mittels einer Anschlußhülse an das Gehäuse außen angeflanscht ist. Die Ausführung des Duplexers ist relativ kompliziert und erfordert bei der Montage des Linsensystems aufwendige Justierarbeiten.

Der Erfindung liegt die Aufgabe zugrunde, bei einem optischen Duplexer mit den im Oberbegriff des Anspruchs 1 angegebenen Merkmalen die zeitaufwendigen Justierarbeiten bei der Montage des optischen Systems zu reduzieren und dessen Abbildungseigenschaften zu verbessern. Diese Aufgabe wird erfindungsgemäß mit den im Anspruch 1 angegebenen konstruktiven Merkmalen gelöst. Eine ohne Justierarbeit auskommende alternative Lösung des optischen Duplexers ist Gegenstand des Anspruchs 6. Die Unteransprüche enthalten vorteilhafte Ausgestaltungen des Duplexers. Mit der Erfindung erzielbare Vorteile sind der Beschreibung zu entnehmen.

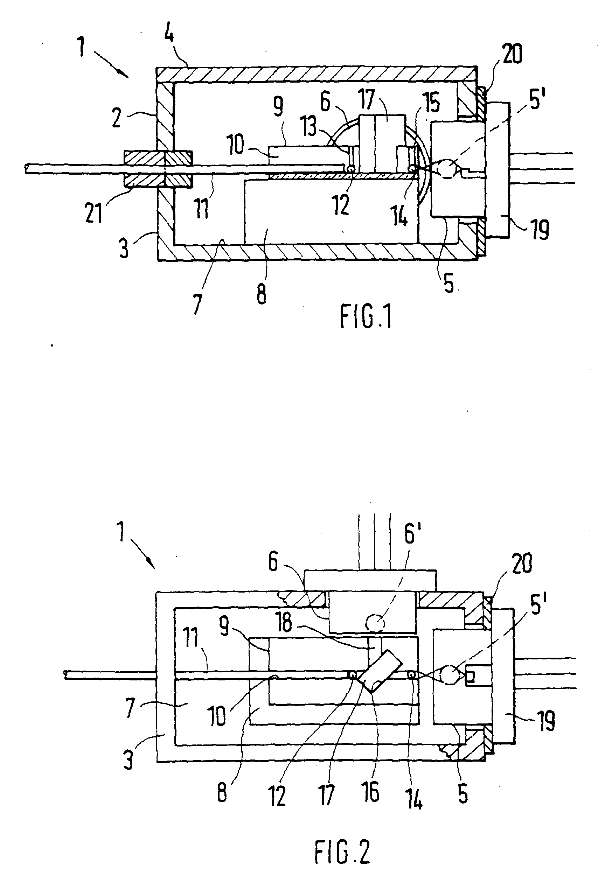

Die Erfindung wird anhand von Fig. 1 und Fig. 2, in denen Ausführungsbeispiele dargestellt sind, wie folgt näher beschrieben. In den Zeichnungen zeigen:
- Fig. 1: einen hybrid aufgebauten optischen Duplexer, teilweise längsgeschnitten, in einer Seitenansicht;
- Fig. 2: den Duplexer der Fig. 1 mit abgenommenem Gehäusedeckel, teilweise ausgeschnitten, in der Draufsicht;
- Fig. 3: einen alternativen optischen Duplexer mit monolithisch integriertem Aufbau, teilweise längsgeschnitten, in einer Seitenansicht;
- Fig. 4: den integrierten Aufbau des Duplexers der Fig. 3, in der Draufsicht.

In den Fig. 1 und 2 ist der optische Duplexer insgesamt mit 1 bezeichnet. Er ist als ein für sich handhabbares Bauelement konzipiert, das ein quaderförmiges, aus einem kastenförmigen Unterteil 3 und einem Deckel 4 gasdicht zusammengefügtes Gehäuse 2 hat. An einer Stirnseite des Gehäuses 2 ist außen eine in das Gehäuse 2 ragende Laserdiode 5 und an einer dazu rechtwinklig stehenden Seitenwand eine nach innen gerichtete Fotodiode 6 befestigt. Bei den Dioden handelt es sich um in Transistorgehäusen gekapselte Ausführungen mit koaxial integrierter Kugellinse 5', 6' und optischem Fenster.

Auf dem Gehäuseboden 7 ist zur Höhenanpassung an die Dioden ein quaderförmiger Block 8 und auf diesem eine mikrooptische Bank 9 fixiert. Die mikrooptische Bank 9 besteht vorzugsweise aus einem Kunststoffplättchen, z.B. aus Polymethylmethacrylat (PMMA), das eine in LIGA-Technik (Lithographie, Galvanik und Abformung) hergestellte Oberflächenstruktur mit schlitzförmigen Ausnehmungen hat. Es sind dies eine das Plättchen von einer Stirnseite bis zur anderen Stirnseite in Längsrichtung vollständig durchsetzende schmale erste Ausnehmung 10, welche auf die Laserdiode 5 ausgerichtet ist. Die Ausnehmung 10 dient einem im folgenden kurz Faser 11 genannten Lichtwellenleiter als Aufnahme und sie ist in der Breite dem Durchmesser der blanken Faser 11 angepaßt. Vor dem Faserende hat die schlitzförmige Ausnehmung 10 in den beiden Seitenwänden je eine sich vertikal erstreckende Einbuchtung 13 zur Einführung und Halterung einer Sammellinse 12, die vorzugsweise als Kugellinse ausgebildet ist.

Die Faser 11 belegt in der Ausnehmung 10 etwa deren halbe Länge. Am unbelegten Ende sind ebenfalls zwei sich gegenüberstehende Einbuchtungen 15 für eine weitere als Kugellinse ausgebildete Sammellinse 14 eingeformt (Fig. 1). Zwischen den beiden genannten Sammellinsen 12, 14 ist eine zweite Ausnehmung 16 angeordnet, die im Umriß dem Querschnitt eines plättchenförmigen Strahlteilers 17 entspricht und die erstgenannte Ausnehmung 10 im Winkel von 45° schneidet. Im Winkel von 90° zur ersten Ausnehmung 10 erstreckt sich vom Strahlteiler 17 weg eine weitere, auf die Fotodiode 6 ausgerichtete dritte Ausnehmung 18, die dem ungehinderten Lichtdurchgang dient (Fig. 2).

Die beschriebenen Ausnehmungen 10 und 16 sind in der mikrooptischen Bank 9 mit sehr engen Toleranzen hergestellt und betragen nur Bruchteile eines Mikrometers. Daher können die optischen Komponenten, wie Faser 11, Sammellinsen 12, 14 und Strahlteiler 17 in die Aufnahmen bildenden Ausnehmungen 10, 16 unmittelbar eingesetzt und ohne weitere Justage fixiert werden. Damit reduzieren sich die erforderlichen Justierarbeiten auf das Positionieren von Laser- und Fotodiode 5, 6. Hierbei wird zweckmäßigerweise eine wenigstens zwischen dem Flansch 19 der Laserdiode 5 und dem Gehäuse 2 des Duplexers 1 angeordnete Zentrierscheibe 20 verwendet, die einen größeren Durchmesser als der Flansch 19 hat und zur sicheren Abdeckung der relativ großen Öffnung im Gehäuse 2 dient.

Bei dem eingangs erwähnten Lichtwellenleiter handelt es sich beispielsweise um eine Einmodenfaser, die mit einem vom Primärcoating befreiten Faserstück in die erste Ausnehmung 10 eingesetzt ist. Das blanke Faserstück hat einen üblichen Durchmesser von 125 Mikrometern. Kommt bei dem Duplexer 1 eine Laserdiode 5 mit integrierter Kugellinse 5' zur Anwendung, werden in die mikrooptische Bank 9 Kugellinsen (Sammellinsen 12, 14) eingesetzt, deren Durchmesser und Brechzahl so gewählt wird, daß die sphärischen Aberrationsfehler sehr klein sind. Die Durchmesser der Kugellinsen liegen daher z.B. im Größenbereich von etwa 125 µm bis 250 µm. Durch die Verkleinerung der Linsen werden die Abbildungsfehler verringert und dadurch die Leistung der optischen Systems verbessert.

Eine andere Ausführung des Duplexers sieht die Verwendung einer Laserdiode vor, die keine integrierte Kugellinse hat. In diesem Fall sind in der mikrooptischen Bank 9 anstelle der Kugellinsen asphärische Sammellinsen 12, 14 abgeformt, die ein gutes Abbildungsverhalten zeigen und von den Dimensionen mit der Ligaebene kompatibel sind. Die Sammellinsen 12, 14 sind hier also einstückiger Bestandteil des Werkstoffes der mikrooptischen Bank 9 und stehen wie Stege in der Ausnehmung 10. Unabhängig von der Bauart des Duplexers 1 ist das anschlußseitige, freie Ende der Faser 11 vorzugsweise an der der Laserdiode 5 gegenüberstehenden Stirnwand gasdicht oder zumindest staubdicht durch das Gehäuse 2 nach außen geführt, wo es durch Spleißen weiterverbindbar ist. Bedarfsweise kann natürlich auch eine miniaturisierte optische Steckkupplung 21 in der Gehäusewand befestigt sein (Fig. 1).

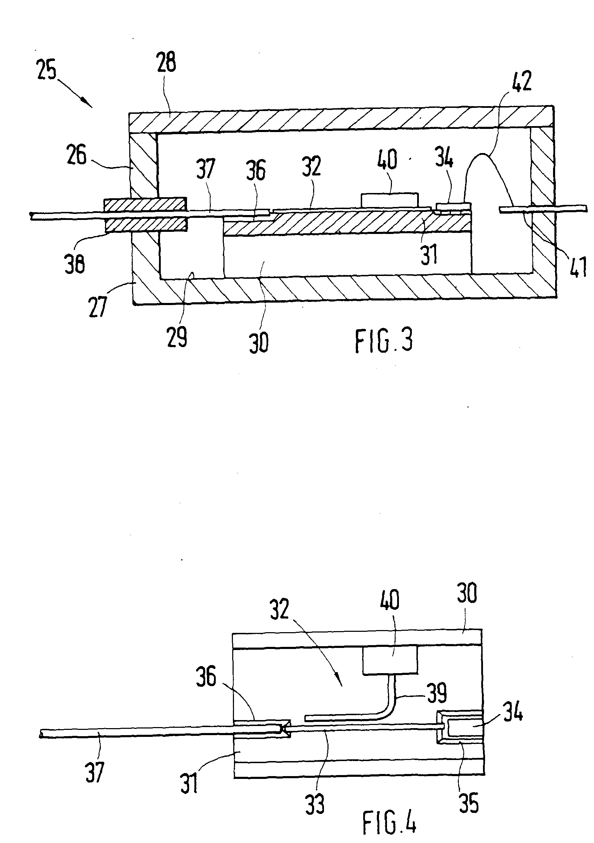

In Fig. 3 ist ein alternatives Beispiel eines optischen Duplexers insgesamt mit 25 bezeichnet. Er besteht aus einem quaderförmigen Bauelement, das ein aus einem kastenförmigen Unterteil 27 und einem Deckel 28 hermetisch dicht zusammengefügtes Gehäuse 26 hat. Auf dem Gehäuseboden 29 ist eine im Grundriß rechteckige Trägerplatte 30 und auf dieser ein etwas schmaleres Siliziumsubstrat 31 fixiert. Das Siliziumsubstrat 31 trägt einen Strahlteiler, der in Form von optischen Leiterbahnen als wellenlängenselektiver Richtkoppler 32 integriert ist. Vor einem Ende einer ersten Leiterbahn 33 ist der Halbleiter einer Laserdiode 34 justagefrei in eine paßgenaue Montagegrube 35 des Siliziumsubstrates 31 eingesetzt und darin mittels Flip-Chip-Bonden fixiert (Fig. 4). Am anderen Ende dieser Leiterbahn 33 hat das Siliziumsubstrat 31 eine im Querschnitt V-förmige Nut 36 mit darin justagefrei befestigtem Lichtwellenleiter. Dieser dient als Anschlußfaser 37, deren rückwärtiges Ende durch eine hermetisch dichte Durchführung 38 des Gehäuses 26 nach außen geführt ist.

Anstelle der vorzugsweise verwendeten Durchführung 38 kann bedarfsweise jedoch auch eine miniaturisierte optische Steckkupplung vorgesehen werden. Eine zweite optische Leiterbahn 39, die mit einem parallel verlaufenden Abschnitt an die erste Leiterbahn 33 gekoppelt ist, endet mit einem abgebogenen Abschnitt vor dem Halbleiter einer auf dem Siliziumsubstrat justagefrei fixierten Fotodiode 40. Je nach Verwendungszweck des Duplexers 25 kann die Fotodiode 40 jedoch auch monolithisch in das Substrat integriert sein, weil Silizium dafür ein ausgezeichnetes Basismaterial darstellt. Die elektrische Ansteuerung von Laser- und Fotodiode 34, 40 geschieht über in Öffnungen der Gehäusewandung eingeglaste Anschlußstifte 41, mit denen sie durch Bonddrähte 42 verbunden sind. Gegenüber einem sich frei im Raum und durch ein Linsensystem ausbreitenden Licht hat die monolithisch integrierte Ausführung den Vorteil, daß das Licht in den Leiterbahnen geführt wird, wodurch die optischen Verluste im Duplexer gering sind.

## Patentansprüche

1. Optischer Duplexer (1) mit einem Gehäuse (2), bei dem an einer Stirnseite eine Laserdiode (5) und an einer dazu rechtwinklig stehenden Seitenwand außen eine Fotodiode (6) befestigt und bei dem an der der Laserdiode (5) gegenüberliegenden Stirnseite ein Lichtwellenleiter in das Gehäuse (2) geführt ist, wobei vor dessen Ende sowie vor der Laserdiode (5) je eine Sammellinse (12, 14) und zwischen diesen ein auf die Fotodiode (6) ausgerichteter Strahlteiler (17) angeordnet ist,
**dadurch gekennzeichnet,** daß im Gehäuse (2) ein als mikrooptische Bank (9) ausgebildetes Kunststoffplättchen fixiert ist, das eine schlitzförmige erste Ausnehmung (10) hat, die das Plättchen von einer Stirnseite bis zur anderen Stirnseite in Längsrichtung durchsetzt und die in der Breite dem Durchmesser der blanken Faser (1 1) des in die Ausnehmung (10) eingelegten Lichtwellenleiters angepaßt ist, und daß eine die erste Ausnehmung (10) schneidende , zweite Ausnehmung (16) vorgesehen ist, die im Umriß dem Querschnitt des in die Ausnehmung (16) eingesetzten Strahlteilers (17) entspricht, von dem aus eine im Kunststoffplättchen vorgesehene dritte Ausnehmung (18) auf die Fotodiode (6) ausgerichtet ist.

2. Optischer Duplexer nach Anspruch 1, dadurch gekennzeichnet, daß die Laser- und die Fotodiode (5, 6) jeweils ein Gehäuse mit integrierter Kugellinse (5', 6') haben.

3. Optischer Duplexer nach Anspruch 1, dadurch gekennzeichnet, daß die Sammellinsen (12, 14) als Kugellinsen ausgebildet und in Einbuchtungen (13, 15) der ersten Ausnehmung (10) fixiert sind.

4. Optischer Duplexer nach Anspruch 1, dadurch gekennzeichnet, daß die Sammellinsen (12, 14) einstückiger Bestandteil der mikrooptischen Bank (9) sind.

5. Optischer Duplexer nach Anspruch 4, dadurch gekennzeichnet, daß die Sammellinsen (12, 14) aus asphärisch abgeformten Sammellinsen (12, 14) bestehen.

## Claims

1. Optical duplexer (1) having a case (2) wherein a laser diode (5) is mounted at one end of the case, wherein a photodiode (6) is mounted to the outside of a sidewall perpendicular to said one end, and wherein an optical fiber is passed into the case (2) through the end wall opposite the laser diode, with two converging lenses (12, 14) being provided in front of the end of the optical fiber and in front of the laser diode (5), receptively, and a beam splitter (17) being interposed between said converging lenses (12, 14) which is pointed at the photodiode (6), characterized in that in the case (2), a plastic platelet designed as a micro-optic bench (9) is fixed which has a slitlike first opening (10) which extends through the patelet in the longitudinal direction from one end to the other and whose width is adapted to the diameter of the bare fiber (11) placed in the opening (10), and that a second opening (16) is provides which intersects the first opening (10) and whose outline corresponds to the cross section of the beam splitter (17), which is fitted in said second opening (16) and from which a third opening (18) in the plastic platelet extends to the photodiode (6).

2. An optical duplexer as claimed in claim 1, characterized in that the laser diode (5) and the photodiode (6) each have a case with a built-in spherical lens (5', 6').

3. An optical duplexer as claimed in claim 1, characterized in that the converging lenses (12, 14) are spherical lenses and are fixed in recesses (13, 15) of the first opening (10).

4. An optical duplexer as claimed in claim 1, characterized in that the converging lenses (12, 14) are integral parts of the micro-optic bench (9).

5. An optical duplexer as claimed in claim 4, characertized in that the converging lenses (12, 14) are aspheric converging lenses (12, 14).

## Revendications

1. Duplexeur optique (1) avec un boîtier (2) sur lequel sont fixés sur une face une diode à laser (5) et sur une face latérale perpendiculaire de l'extérieur une photodiode (6). Sur la face opposée à la diode à laser (5), un guide d'ondes lumineuses est inséré dans le boîtier (2) avec devant l'extrémité de celui-ci ainsi que devant la diode à laser (5) une lentille convergente (12, 14), et entre ces dernières un séparateur de faisceau (17) orienté vers la photodiode (6),
caractérisé par le fait qu'à l'intérieur du boîtier est fixé une plaquette en matière plastique en forme de banc microoptique (9) possédant un premier évidement en forme de rainure (10) traversant la plaquette longitudinalement d'un côté à l'autre et qui est adapté au diamètre de la fibre (11) du guide d'ondes lumineuses placé dans cet évidement (10) et par la présence d'un deuxième évidement (16) coupant transversalement le premier évidement (10) dont la géométrie correspond à la section du séparateur de faisceau (17) qui est inséré et duquel part un troisième évidement (18) orienté vers la photodiode (6).

2. Duplexeur optique selon la revendication 1, caractérisé par le fait que la photodiode (5) et la diode à laser (6) possèdent chacune un boîtier avec lentille sphérique intégrée (5', 6').

3. Duplexeur optique selon la revendication 1, caractérisé par le fait que les lentilles convergentes (12, 14) se présentent sous forme de lentilles sphériques qui sont fixées dans les creux (13, 15) ménagés dans le premier évidement (10).

4. Duplexeur optique selon la revendication 1, caractérisé par le fait que les lentilles convergentes (12, 14) font partie intégrante du banc microoptique (9).

5. Duplexeur optique selon la revendication 4, caractérisé par des lentilles convergentes (12, 14) de forme asphèrique.
